# FASCICULE DE BREVET EUROPEEN

(11) **EP 3 464 830 B1**
(45) Date de publication et mention de la délivrance du brevet: **29.07.2020**
(21) Numéro de dépôt: 17730853.3
(22) Date de dépôt: 18.05.2017
(51) Int. Cl.: F01D 11/12, F01D 25/24, F04D 29/52, F04D 29/02, F04D 29/64

(54) **PROCÉDÉ DE FABRICATION D'UN CARTER ANNULAIRE ÉQUIPÉ DE TURBOMACHINE**
VERFAHREN ZUR HERSTELLUNG EINES RINGFÖRMIGEN AUSGESTATTETEN GEHÄUSES FÜR EINE TURBOMASCHINE
METHOD FOR MANUFACTURING AN ANNULAR EQUIPPED CASING FOR A TURBOMACHINE

(30) Priorité: 24.05.2016 FR 1654606
(43) Date de publication de la demande: 10.04.2019
(73) Titulaire: Safran Aircraft Engines, 75015 Paris (FR)
(72) Inventeur: FABRE, Hubert Jean Marie, 77550 Moissy-Cramayel (FR); SIX, Pauline Nathalie, 77550 Moissy-Cramayel (FR); TECHER, Marc-Emmanuel Jean François, 77550 Moissy-Cramayel (FR)
(74) Mandataire: Gevers & Orès
(86) Numéro de dépôt international: PCT/FR2017/051197
(87) Numéro de publication internationale: WO 2017/203134

(56) Documents cités:
- EP-A1- 2 418 387
- EP-A1- 2 886 804
- FR-A1- 2 339 741

## Description

L'invention se rapporte à un procédé de fabrication d'un carter annulaire équipé d'un matériau abradable pour une turbomachine.

Les turbomachines aéronautiques sont principalement constituées par au moins un compresseur, dans lequel l'air aspiré dans l'entrée d'air de la turbomachine est comprimé vers une chambre de combustion dans laquelle le carburant injecté est brûlé, puis transmis à au moins une turbine dans laquelle les gaz brûlés sont détendus pour entraîner le compresseur solidaires en rotation de la turbine, et enfin évacué par un dispositif d'éjection. Les compresseurs et les turbines aéronautiques sont constitués d'ailettes, ou aubes, qui sont mues en rotation à l'intérieur d'un carter global qui assure l'étanchéité de la veine d'air avec l'extérieur du moteur.

Par exemple, le carter global est constitué d'une succession axiale de carters annulaires avec lequel les aubes ménagent un jeu de fonctionnement, chaque carter annulaire formant un tronçon axial de la paroi interne de la veine d'écoulement de l'air. Le jeu entre les aubes et le carter annulaire doit être suffisant pour qu'aucun frottement ne vienne freiner la rotation des pièces mobiles mais il doit être contrôlé pour éviter qu'une quantité importante de gaz ne soit détournée des surfaces actives des aubages. Afin d'assurer un rendement aussi élevé que possible, il est donc important de maîtriser ce jeu.

En effet, il est connu que le jeu existant entre les extrémités des aubes mobiles et le carter annulaire dégrade le rendement du moteur de la turbomachine. Dans le cas d'un carter annulaire de compresseur en particulier, ce jeu peut notablement modifier et dégrader le fonctionnement du compresseur jusqu'à l'apparition d'un phénomène de « pompage », qui résulte du décrochage du flux d'air de la surface des aubes. Le contrôle de la circulation de l'air en bout des aubes constitue ainsi un enjeu primordial pour obtenir à la fois un bon rendement aérodynamique du compresseur ou de la turbine et, dans le cas particulier d'un compresseur, pour avoir une marge suffisante contre le phénomène de pompage.

De façon connue, afin de contrôler ce jeu, le carter annulaire porte un revêtement annulaire en matériau abradable, et forme ainsi un carter équipé. Ce revêtement, qui est rapporté dans le carter annulaire sous la forme d'un matériau abradable, s'étend autour et à faible distance radiale des aubes, qui peuvent, en fonctionnement, frotter contre le matériau abradable et l'user par frottement. Ceci permet d'optimiser les jeux radiaux entre les aubes et le carter équipé qui les entoure et donc de limiter les fuites de gaz aux sommets ou extrémités radialement externes des aubes.

Ce revêtement peut être déposé sur un ruban de support solidaire du carter, comme cela est décrit dans le document EP-2.886.804-A1.

Ce revêtement peut aussi être rapporté dans le carter annulaire sous la forme d'une cartouche annulaire de matériau abradable.

Le carter global peut donc être réalisé sous la forme d'une succession axiale, suivant l'axe de la turbomachine, de carters annulaires eux-mêmes porteurs de cartouches annulaires de matériau abradable formant ainsi des carters équipés.

Chaque cartouche annulaire de matériau abradable n'est pas fixée directement sur le carter annulaire nu correspondant. En effet, chaque carter annulaire nu reçoit préalablement une virole de support du matériau abradable. Cette virole est constituée d'un bloc annulaire de matériau en nid d'abeilles recouvert par une peau rigide. Une fois assemblée au carter nu, elle forme ainsi avec celui-ci un carter porteur qui comporte une virole et qui est ainsi apte à assurer le support de la ou des cartouches annulaires de matériau abradable.

### ETAT DE LA TECHNIQUE ANTERIEURE

Selon l'état de la technique antérieure, le carter porteur est réalisé selon trois étapes principales successives de fabrication d'une virole de support, d'usinage de la virole de support, et de collage de la virole de support dans le carter annulaire nu pour obtenir un carter porteur.

Au cours d'une première étape de fabrication de la virole de support, on insère un bloc annulaire de matériau en nid d'abeilles dans une préforme de peau en matériau composite imprégné, par exemple une préforme réalisée en fibres de carbone imprégnées par une résine époxy.

Puis, l'ensemble, qui présente une section en forme de demi-sandwich, est soumis à une simple cuisson au cours d'une deuxième étape de manière à former une virole de support brute.

La surface interne du carter annulaire nu ne correspond pas nécessairement à son profil théorique. En particulier, dans le cas d'un carter nu réalisé en matériau composite qui devait présenter théoriquement une section circulaire, on a constaté que la face interne du carter nu après fabrication tendait plutôt à présenter une forme qui n'est pas parfaitement circulaire. En outre, la face interne du carter annuaire nu peut présenter d'éventuels défauts de surface.

Il est donc nécessaire, dans le procédé selon l'état de la technique, de procéder à un usinage de la face périphérique externe de la virole de support de manière qu'elle épouse au mieux la face interne du carter annulaire nu afin de minimiser les déformations que la virole de support pourrait subir, ou les écarts de position que la virole de support pourrait subir par rapport à sa position théorique, car de telles déformations ou de tels déplacements pourraient avoir pour conséquence de modifier la position requise pour la cartouche de matériau abradable que le carter porteur doit recevoir.

Par ailleurs, la face externe de la virole de support est destinée à être collée contre la face interne du carter nu. L'usinage de la face périphérique externe de la virole de support est à ce titre d'autant plus nécessaire qu'il permet d'éviter une inadéquation des surfaces de collage de la virole de support et du carter annulaire nu, qui pourrait donner lieu à des défauts de collage.

Pour ce faire, au cours d'une troisième étape, on mesure la face interne du carter annulaire nu de manière à en déduire un profil tridimensionnel que la face périphérique externe de la virole de support doit épouser. Puis, au cours d'une quatrième étape, on place la virole de support dans un outillage de maintien et on usine la face périphérique externe de la virole selon un profil tridimensionnel correspondant à celui de la face périphérique interne du carter annulaire nu. Puis au cours d'une cinquième étape, on colle la virole de support dans le carter annulaire nu pour former le carter porteur.

Ces étapes constituent les étapes de fabrication du carter porteur muni de sa virole, constituant une première phase de fabrication du carter équipé. Puis, au cours d'une deuxième phase de fabrication du carter équipé, on colle la cartouche de matériau abradable dans le carter porteur.

Cette conception présente l'inconvénient de nécessiter une opération de mesure de la face périphérique interne du carter annulaire nu avec des tolérances très élevées car le moindre défaut de forme de cette face périphérique interne a des conséquences sur le positionnement de la virole de support après sa fixation.

Par ailleurs, l'opération d'usinage est de surcroît très contraignante, de par les outillages qui sont mis en œuvre pour sa réalisation. En effet, une fois cuite, la virole de support doit être positionnée sur un outillage spécifique permettant de la brider pendant que l'on réalise son usinage. Cet outillage est donc par conséquent volumineux et coûteux.

Pour remédier à ces inconvénients il est souhaitable de permettre l'usinage du bloc de matériau en nid d'abeilles, lorsqu'il est nécessaire, avec un outillage réduit et selon des tolérances inférieures.

### EXPOSÉ DE L'INVENTION

L'invention a donc pour but de simplifier les opérations de préparation de la virole et son usinage en vue de l'adapter à la surface interne du carter annulaire nu.

L'invention permet d'atteindre ce but en fabricant la virole directement dans le carter annulaire nu, c'est-à-dire en réalisant, lorsque cela est nécessaire, l'usinage du bloc de matériau en nid d'abeilles en place dans le carter annulaire nu, et la fabrication de la virole par cuisson de matériau composite en réalisant cette opération également en place dans le carter annulaire nu.

A cet effet, l'invention propose un procédé de fabrication d'un carter porteur muni d'une virole destinée à porter au moins une cartouche de matériau abradable pour une turbomachine, ledit carter porteur comportant au moins un carter annulaire nu et un bloc de matériau, notamment en nid d'abeilles, qui comporte une face externe configurée pour être fixée à une face interne dudit carter annulaire nu, ledit bloc étant recouvert d'une peau apte à porter ladite cartouche de matériau abradable, caractérisé en ce qu'il comporte successivement :
- une étape au cours de laquelle on fixe la face externe du bloc sur la face interne du carter annulaire nu,
- une étape au cours de laquelle on contrôle la circularité d'une face interne du bloc et au cours de laquelle, si nécessaire, on usine au rond ladite face interne du bloc,
- une étape au cours de laquelle, simultanément, on fabrique ladite peau et on la fixe audit bloc.

Ce procédé de fabrication permet de se dispenser de mesurer la face interne du carter annulaire nu, et de se dispenser de réaliser un usinage complexe sur la face externe du bloc. Le seul usinage réalisé est, lorsqu'il est nécessaire, un usinage très simple réalisé sur la face interne du bloc, puisqu'il s'agit d'un usinage au rond.

Selon d'autres caractéristiques du procédé :
- au cours de l'étape de fabrication et de fixation de la peau, on recouvre ledit bloc d'un matériau composite imprégné et on polymérise ledit matériau composite sur ledit bloc pour obtenir ladite peau tout en la fixant au bloc,
- au cours de l'étape de fabrication et de fixation de la peau, on dispose ensemble le carter annulaire nu, le bloc et le matériau composite dans un moyen de cuisson permettant simultanément la polymérisation du matériau composite et sa fixation au bloc,
- au cours de l'étape de fabrication et de fixation de la peau, on utilise comme moyen de cuisson une enceinte autoclave,
- au cours de l'étape de fabrication et de fixation de la peau, on utilise un matériau composite tissé et imprégné dont on drape le bloc,
- au cours de l'étape de fabrication et de fixation de la peau, on fixe au carter porteur au moins un autre élément,
- au cours de la première étape, on utilise un bloc de matériau en nid d'abeilles d'épaisseur constante.

L'invention concerne aussi un carter porteur supportant au moins une cartouche de matériau abradable pour une turbomachine, comportant au moins un carter annulaire nu de section non circulaire sur au moins une partie de son étendue axiale et un bloc de matériau, notamment en nid d'abeilles, qui comporte une face externe collée à une face interne dudit carter annulaire nu et qui est recouvert d'une peau apte à porter ladite cartouche de matériau abradable, caractérisé en ce la face interne du bloc est usinée au rond.

L'invention concerne encore un procédé de fabrication d'un carter annulaire équipé de turbomachine, caractérisé en ce qu'il comporte une première phase de fabrication d'un carter porteur selon le procédé précédemment décrit et une seconde phase au cours de laquelle on colle une cartouche annulaire de matériau abradable dans ledit carter porteur.

L'invention concerne enfin un carter équipé obtenu selon ce procédé.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue schématique en coupe d'un carter équipé de turbomachine selon un état antérieur de la technique;
- les figures 2A et 2B sont des vues schématiques représentant des étapes d'un procédé de fabrication d'une virole de support pour le carter équipé de la figure 1, faisant partie d'une première phase d'un procédé de fabrication du carter équipé de la figure 1 ;
- la figure 3 est une vue schématique d'une étape de fabrication d'un carter porteur, faisant partie de la première phase du procédé de fabrication du carter équipé de la figure 1 ;
- la figure 4 est un organigramme représentant toutes les phases du procédé de fabrication du carter équipé de la figure 1 ;
- les figures 5A, 5B, à 5C sont des vues schématiques représentant trois phases de fabrication d'un carter porteur selon l'invention ;
- la figure 6 est un organigramme représentant toutes les phases du procédé de fabrication du carter équipé selon l'invention.

Dans la description qui va suivre, des chiffres de référence identiques désignent des pièces identiques ou ayant des fonctions similaires.

Dans la suite de la présente description, les orientations « internes» et « externes» sont définies par référence à un axe de rotation des rotors d'une turbomachine, les orientations « externes » étant tournées à l'opposé dudit axe, et les orientations « internes » étant tournées vers ledit axe.

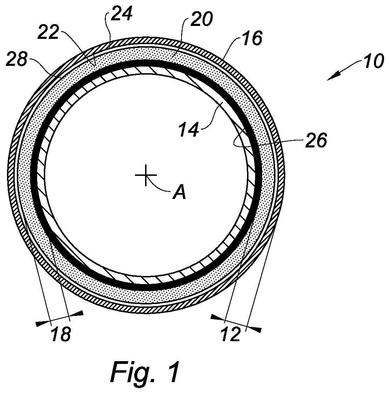

On a représenté à la figure 1 un carter équipé annulaire 10 pour une turbomachine. De manière connue, le carter annulaire équipé 10 est constitué d'une pluralité d'éléments annulaires concentriques et coaxiaux par rapport à un axe A de la turbomachine, l'axe A correspondant par exemple un axe de rotation de rotors (non représentés) de la turbomachine. Ainsi, le carter équipé 10 est constitué, de l'extérieur vers l'intérieur, d'un carter 12 porteur muni d'une virole recevant une cartouche annulaire 14 de matériau abradable qui détermine une veine de gaz de ladite turbomachine. Plus particulièrement, le carter porteur 12 est lui-même formé d'un carter nu 16 recevant intérieurement une virole de support 18. La virole de support 18 est donc au final configurée pour recevoir intérieurement la cartouche annulaire 14 en matériau abradable.

De manière connue, la virole de support 18 est constitué d'un bloc 20 de matériau en nid d'abeilles comportant une face externe 22 configurée pour être fixée à une face interne 24 dudit carter annulaire nu 16 et qui est recouvert d'une peau 26.

La peau 26 est généralement, mais de manière non limitative de l'invention, une peau 26 en matériau composite réalisée par cuisson d'une préforme de peau (non représentée) en matériau composite imprégné de résine, par exemple un tissage de fibres de carbone imprégné de résine époxy.

De manière connue également, la face externe 22 du bloc 20 de matériau en nid d'abeilles, qui correspond aussi à la face externe 22 de la virole de support 18, est fixée à la face interne 24 du carter annulaire nu 16 par l'intermédiaire d'un film de colle 28.

Dans une première phase P1 d'un procédé de fabrication du carter équipé 10 selon un procédé connu de l'état de la technique, on fabrique la virole 18, puis le carter porteur 12 en assemblant la virole 18 au carter nu 16, et dans une deuxième phase P2, on assemble le matériau abradable 14 au carter porteur 12 pour obtenir le carter équipé 10.

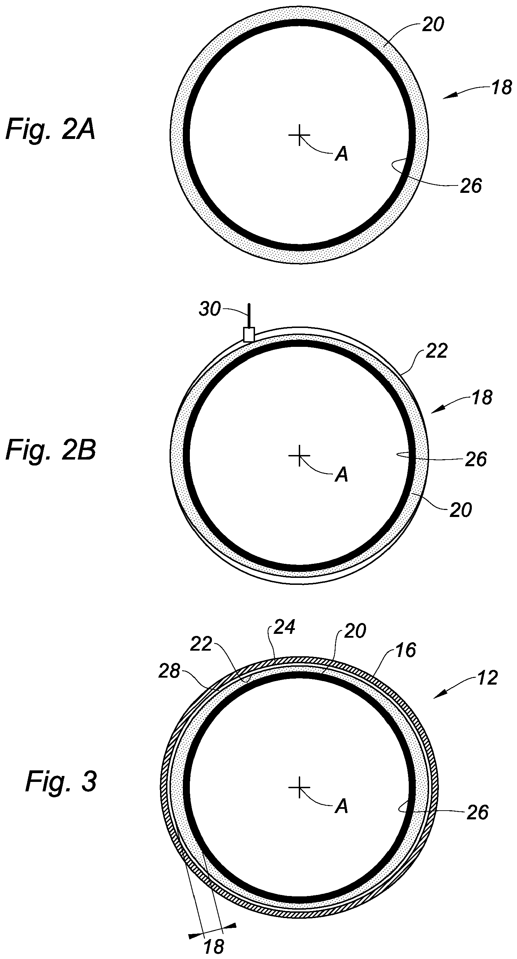

Ainsi, comme cela a été représenté aux figures 2A à 3, on commence, au cours d'une première phase dont des étapes ont été représentées aux figures 2A et 2B, par fabriquer la virole de support 18.

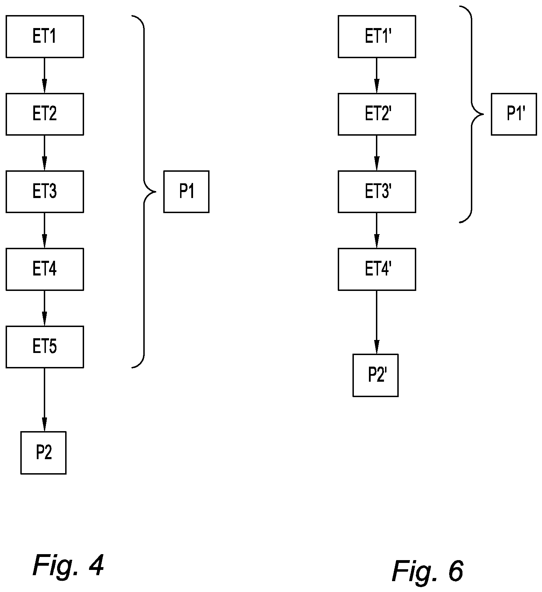

Comme l'illustre la figure 4, la fabrication de la virole de support 18 brute débute par une première étape ET1 au cours de laquelle on insère un bloc 20 de matériau en nid d'abeilles, aussi connu sous le nom de « Nida » dans une préforme de peau en matériau composite imprégné, cet ensemble étant de préférence maintenu dans un moule approprié (non représenté) afin d'éviter qu'il ne se déforme. Puis, au cours d'une deuxième étape ET2, on cuit cet ensemble. Le résultat est une virole brute 18 telle que celle qui a été représentée à la figure 2A.

A l'issue de cette étape ET2, la préforme de peau en matériau composite est devenue une peau 26 rigide telle que représentée à la figure 2A. Le bloc 20 de matériau en nid d'abeilles et la peau 26 sont adhérisés suite à la cuisson du matériau composite.

Par ailleurs, la surface interne 24 du carter nu 16 précédemment représenté à la figure 1 ne correspond pas nécessairement à son profil théorique. En particulier, dans le cas d'un carter nu 16 de révolution réalisé en matériau composite, on a constaté que la face interne 24 du carter nu 16 après fabrication tendait à présenter une forme qui n'est pas parfaitement circulaire plutôt que la forme circulaire théoriquement requise qui est adaptée pour recevoir sans fuites importante une roue de compresseur ou de turbine de la turbomachine (non représentée). En outre, la face interne 24 du carter nu 16 peut présenter d'éventuels défauts de surface.

Dans la mesure où, à l'issue de l'étape ET2, la forme générale de la peau rigide 26 ne doit plus être modifiée car elle doit présenter une épaisseur minimum nominale, il est nécessaire de procéder à un usinage de la face périphérique externe 22 de la virole de support 18 de manière qu'elle épouse la face périphérique interne 24 du carter nu 16 afin de minimiser, d'une part, les déformations que la virole de support 18 pourrait subir par rapport à son profil théorique, et d'autre part les écarts de positionnement de la virole de support 18 par rapport à l'axe A de la turbomachine une fois montée dans le carter annulaire nu 16. En effet, de telles déformations et de tels écarts de positionnement auraient pour conséquence de modifier la position requise pour la virole de support 18, et par conséquent pour la cartouche de matériau abradable 14 que la virole de support 18 doit recevoir.

Pour ce faire, comme l'illustre la figure 4, au cours d'une troisième étape ET3 (non représentée), on mesure les dimensions de la face périphérique interne 24 du carter nu 16 de manière à en déduire un profil tridimensionnel que la face périphérique externe 22 de la virole support 18 doit épouser, cette face périphérique 22 correspondant aussi à la face périphérique externe 22 du bloc 20 de matériau en nid d'abeilles.

Puis, au cours d'une quatrième étape ET4, on place la virole de support 18 dans un outillage approprié (non visible) qui permet de le maintenir et, comme cela a été représenté à la figure 2B, on usine alors la face périphérique externe 22 de la virole de support 18 selon un profil tridimensionnel correspondant à celui de la face périphérique interne 24 du carter nu 16, par exemple à l'aide d'une fraise deux tailles 30.

Puis, au cours d'une cinquième étape ET5, on colle la virole de support 18 dans la carter annulaire nu 16 par l'intermédiaire du film de colle 28 pour obtenir le carter porteur 12.

Les première à cinquième étapes ET1 à ET5 des procédés de fabrication de la virole de support 18 et du carter porteur 12 muni de sa virole 18, comprenant en particulier les étapes ET1 et ET4 qui ont été représentées aux figures 2A et 2B, constituent une première phase P1 du procédé de fabrication du carter équipé 10 muni du matériau abradable. Puis, au cours d'une deuxième phase P2 de fabrication de ce carter équipé représentée à la figure 4, on colle la cartouche de matériau abradable 14 dans le carter porteur 12 de la figure 3 de manière à obtenir le carter équipé 10 tel que représenté à la figure 1.

Cette conception présente l'inconvénient de nécessiter une opération de mesure de la face périphérique interne 24 du carter annulaire nu 16 avec des tolérances très élevées, puisque le moindre défaut de forme de cette face périphérique interne 24 pourrait avoir des conséquences sur le positionnement de la virole 18 de support après sa fixation et sur la qualité du collage entre la face interne 24 du carter nu 16 et la virole 18. Il est donc par conséquent nécessaire de minimiser ces défauts au maximum.

Par ailleurs, l'opération d'usinage est de surcroît très contraignante de par les outillages qui sont mis en œuvre pour sa réalisation. En effet, une fois cuite, la virole de support 18 doit être positionnée sur un outillage spécifique permettant de la brider pendant que l'on réalise son usinage, car elle ne peut naturellement pas être usinée en l'absence de support. Cet outillage est donc par conséquent volumineux et coûteux.

Pour remédier à cet inconvénient il est souhaitable de permettre la fabrication de la virole 18 de support en permettant l'usinage du bloc de matériau en nid d'abeilles avec un outillage réduit, voire en l'absence d'outillage spécifique, et selon des tolérances inférieures.

Dans ce but, l'invention propose un procédé de fabrication de la virole 18 de support en l'absence d'outillage spécifique.

Pour ce faire, l'invention propose avantageusement un procédé de fabrication de la virole de support 18 qui est intégré au procédé de fabrication du carter porteur 12, la virole de support 18 étant réalisé en même temps que le carter porteur 12.

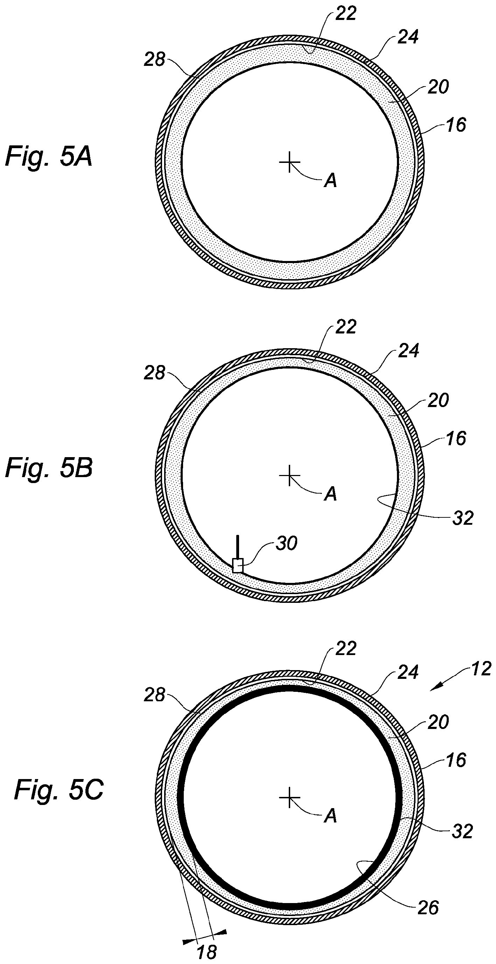

À cet effet, comme l'illustrent les figures 5A à 5C, le procédé de fabrication du carter porteur 12 comporte successivement une étape au cours de laquelle on colle la face externe 22 du bloc 20 sur la face interne 24 du carter annulaire nu 16, puis une étape au cours de laquelle on contrôle la circularité d'une face interne du bloc 20 et au cours de laquelle, si nécessaire, on usine au rond cette face interne 32 du bloc 20, et enfin une étape au cours de laquelle, simultanément on fabrique la peau 26 et on la fixe sur la bloc 20.

Comme l'illustre la figure 6, la fabrication du carter porteur 12 débute par une première étape ET1' au cours de laquelle on insère le bloc 20 de matériau en nid d'abeilles ou « Nida » directement dans le carter annulaire nu 16, comme représenté à la figure 5A. En particulier, la face périphérique extérieure 22 du bloc 20 de matériau en nid d'abeilles est brute et n'est donc pas usinée et est collée dans son aspect brut par l'intermédiaire du film de colle 28. Au cours de cette première étape ET1', on utilise un bloc 20 de matériau en nid d'abeilles d'épaisseur constante.

Le matériau en nid d'abeilles du bloc 20 est relativement souple et épouse le profil de la face interne 24 du carter annulaire nu 16.

Puis, au cours d'une deuxième étape ET2', on réalise le collage du bloc 20 de matériau en nid d'abeilles, par exemple par cuisson.

Puis, au cours d'une troisième étape ET3', on contrôle la circularité de la face interne 32 du bloc 20.

Si le carter annulaire nu 16 est parfaitement circulaire, le bloc 20 de matériau en nid d'abeilles est donc en principe lui aussi parfaitement circulaire et ne nécessite en principe pas d'usinage supplémentaire. Il est toutefois possible de prévoir un usinage par sécurité.

Dans le cas contraire, si nécessaire, on usine au rond la face interne 32 du bloc 20, comme représenté à la figure 5B. Cet usinage est réalisé par exemple à l'aide d'une fraise deux tailles 30, et il consiste à conférer à la face interne 32 du bloc 20 une section parfaitement circulaire suivant toute son étendue axiale.

Comme on le voit, le procédé selon l'invention est particulièrement avantageux en ce qu'il permet de se dispenser de l'usinage de la face périphérique extérieure 22 du bloc 20 de matériau en nid d'abeilles.

Une première conséquence de cette configuration est que, le bloc 20 de matériau en nid d'abeilles étant maintenu par le carter nu 16, il n'est pas nécessaire de placer le bloc 20 dans un outillage spécifique, puisque le carter nu 16 en assure le bridage et le maintien pendant l'usinage par la fraise 30. Cette configuration permet donc d'éviter de faire appel à un tel outillage et par conséquent de réduire la durée totale du procédé de fabrication du temps dévolu à la mise en place dans l'outillage et à l'extraction hors de cet outillage.

Une seconde conséquence de cette configuration est que, l'usinage de la face interne 32 du bloc 20 étant un usinage au rond, il n'est pas nécessaire, comme c'était le cas dans les procédés connus de l'état de la technique, de procéder à une mesure de la face interne 24 du carter nu 16. La seule condition à respecter lors de l'usinage au rond de la face interne 32 du bloc 20 est une condition de coaxialité avec l'axe A de la turbomachine.

A l'issue de cette étape ET3', le carter nu 16 est pourvu du bloc 20 de matériau en nid d'abeilles mais ne constitue pas encore un carter porteur 12 car la virole 18 n'est pas encore constituée, puisque le bloc 20 de matériau en nid d'abeilles n'est pas recouvert de la peau 26.

Ainsi, à la différence du carter porteur 12 selon l'état de la technique, le carter porteur 12 selon l'invention, lorsque son carter annulaire nu 16 n'a pas une face interne 24 ayant une section transversale de forme parfaitement circulaire sur au moins une partie de son étendue axiale, comporte un bloc 20 dont la face interne 32 est usinée au rond pour respecter la contrainte de circularité.

Puis, au cours d'une quatrième étape ET4', on fabrique simultanément la peau 26 et on la fixe dans le bloc 20.

Pour ce faire, dans le mode de réalisation préféré de l'invention, on recouvre de préférence le bloc 20 d'un matériau composite imprégné et on polymérise ledit matériau composite sur le bloc 20 pour obtenir la peau 26 tout en la fixant au bloc 20.

Le résultat est un carter porteur 12 tel que représenté à la figure 5C.

On remarquera que selon ce procédé, la virole 18 constituée du bloc 20 de matériau élastomère et de la peau 26 est fabriquée en même temps qu'elle est fixée au carter porteur 12.

De préférence, au cours de cette quatrième étape, la cuisson du matériau composite imprégné constituant la peau 26 n'est pas réalisée indépendamment. On dispose ensemble le carter annulaire nu 16, le bloc 20 de matériau en nid d'abeilles et le matériau composite de la peau 26 dans un moyen de cuisson qui permet simultanément, de par l'élévation de température qu'il provoque, la polymérisation du matériau composite et sa fixation au bloc 20.

De préférence, on utilise pour la fabrication de la peau 26 un matériau composite tissé et imprégné dont on drape le bloc 20 de matériau en nid d'abeilles.

A titre indicatif, la cuisson, au cours de la quatrième étape de cuisson, est réalisée à une température de 150°.

À l'issue de cette quatrième étape, le matériau composite imprégné est devenu une peau 26 rigide, apte à recevoir une cartouche de matériau abradable. Le bloc 20 de matériau en nid d'abeilles et la peau 26 sont adhérisés suite à la cuisson du matériau composite et forment une virole de support 18 intégrée au carter porteur 12.

Les première à quatrième étapes ET1' à ET4' du procédé de fabrication du carter porteur 12 constituent une première phase P1' du procédé de fabrication du carter équipé 10. Puis, au cours d'une deuxième phase P2' représentée à la figure 6, on colle la cartouche 14 de matériau abradable pour obtenir le carter équipé qui a été représenté à la figure 1, ce collage pouvant être effectué lui aussi par cuisson.

Le carter annulaire nu 16 mis en œuvre dans le procédé peut être un carter de tout type connu de l'état de la technique. Toutefois, de préférence, le carter annulaire nu 16 est un carter en matériau composite obtenu également au préalable par cuisson d'une préforme en matériau composite.

Le matériau composite de la peau 26 n'admettant qu'un nombre limité de cycles de cuisson, il sera compris que, avantageusement, son cycle de cuisson est prévu pour coïncider avec une étape de fixation d'un autre élément sur carter 12 porteur.

Ainsi au cours de l'étape ET4', on peut utiliser le cycle de cuisson pour fixer un autre élément au carter porteur 12. Par exemple, le cycle de cuisson peut être utilisé pour fixer au carter annulaire nu 16 un élément de protection thermique à base de fibres de verre, aussi connu sous le nom de « pli de verre », qui permet d'offrir une protection thermique locale au carter nu 16. Il est aussi possible de fixer sur la surface externe du carter annulaire nu 16 des panneaux d'isolation phonique, ou encore des éléments de fixation permettant l'accrochage d'organes ou de conduits sur la surface externe du carter nu 16.

Ainsi, comme on l'a vu, la réalisation d'un carter équipé 10 selon l'invention comporte une première phase P1' de quatre étapes ET1', ET2', ET3', ET4' suivie d'une deuxième phase P2' soit un total de cinq opérations, alors que, selon l'état antérieur de la technique, le carter annulaire équipé 10 était obtenu à l'issue d'une première phase P1' de cinq étapes ET1', ET2', ET3', ET4', ET5' suivie d'une deuxième phase P2' soit un total de six opérations. Il en résulte par conséquent un gain de temps appréciable dans le cadre d'une fabrication en grande série, non seulement du fait de la réduction du nombre d'opérations, mais également de la réduction de la complexité de celles-ci.

L'invention trouve donc à s'appliquer à tout carter annulaire équipé 10 de turbomachine, et en particulier à tout carter annulaire équipé 10 comportant un carter annulaire nu 16 en matériau composite.

## Revendications

1. Procédé de fabrication d'un carter porteur (12) muni d'une virole (18) destinée à porter au moins une cartouche (14) de matériau abradable pour une turbomachine, ledit carter (12) porteur comportant au moins un carter annulaire nu (16) et un bloc de matériau (20) qui comporte une face externe (22) configurée pour être fixée à une face interne (24) dudit carter annulaire nu (16) ledit bloc étant recouvert d'une peau (26) apte à porter ladite cartouche (14) de matériau abradable, ledit bloc (20) et ladite peau (26) formant ladite virole (18),
**caractérisé en ce qu'**il comporte successivement :
- une étape (ET1') au cours de laquelle on fixe la face externe (22) du bloc (20) sur la face interne (24) du carter annulaire nu (16),
- une étape (ET2') au cours de laquelle on contrôle la circularité d'une face interne (32) du bloc (20) et au cours de laquelle, si nécessaire, on usine au rond ladite face interne (32) du bloc (20),
- une étape (ET4') au cours de laquelle, simultanément, on fabrique ladite peau (26) et on la fixe audit bloc (20).

2. Procédé selon la revendication précédente, **caractérisé en ce que**, au cours de l'étape (ET4') de fabrication de la peau (26) et de fixation de ladite peau (26) au bloc, on recouvre ledit bloc (20) d'un matériau composite imprégné et on polymérise ledit matériau composite sur ledit bloc (20) pour obtenir ladite peau (26) tout en la fixant au bloc (20).

3. Procédé selon la revendication précédente, **caractérisé en ce que**, au cours de l'étape (ET4') de fabrication de la peau (26) et de fixation de ladite peau (26) au bloc, on dispose ensemble le carter annulaire nu (16), le bloc (20) et le matériau composite dans un moyen de cuisson permettant simultanément la polymérisation du matériau composite et sa fixation au bloc (20).

4. Procédé selon la revendication précédente, **caractérisé en ce que**, au cours de l'étape (ET4') de fabrication de la peau (26) et de fixation de ladite peau (26) au bloc, on utilise comme moyen de cuisson une enceinte autoclave.

5. Procédé selon l'une des revendications 3 ou 4, **caractérisé en ce que**, au cours de l'étape (ET4') de fabrication de la peau (26) et de fixation de ladite peau (26) au bloc, on utilise un matériau composite tissé et imprégné dont on drape le bloc (20).

6. Procédé selon l'une des revendications 3 à 5, **caractérisé en ce que**, au cours de l'étape (ET4') de fabrication de la peau (26) et de fixation de ladite peau (26) au bloc, on fixe au carter (12) porteur au moins un autre élément.

7. Procédé selon l'une des revendications 1 à 6, **caractérisé en ce que**, au cours de la première étape (ET1'), on utilise un bloc de matériau en nid d'abeilles (20) d'épaisseur constante.

8. Carter porteur (12) supportant au moins une cartouche (14) de matériau abradable pour une turbomachine, comportant au moins un carter annulaire nu (16) de section non circulaire sur au moins une partie de son étendue axiale et un bloc (20) de matériau qui comporte une face externe (22) collée à une face interne (24) dudit carter annulaire nu (16) et qui est recouvert d'une peau (26) apte à porter ladite cartouche (14) de matériau abradable,
**caractérisé en ce que** la face interne (32) du bloc est usinée au rond.

9. Procédé de fabrication d'un carter annulaire équipé (10) de turbomachine, **caractérisé en ce qu'**il comporte une première phase (P1') de fabrication d'un carter porteur (12) selon le procédé des revendications 1 à 7 et une seconde phase (P2') au cours de laquelle on colle une cartouche (14) annulaire de matériau abradable dans ledit carter porteur (12).

10. Turbomachine comportant un carter annulaire équipé (10) obtenu selon le procédé de la revendication 9.

## Patentansprüche

1. Verfahren zur Herstellung eines Traggehäuses (12), das mit einem Mantel (18) versehen ist, der dazu bestimmt ist, mindestens eine Kartusche (14) aus abreibbarem Material für eine Turbomaschine zu tragen, wobei das Traggehäuse (12) mindestens ein nacktes, ringförmiges Gehäuse (16) und einen Materialblock (20) umfasst, der eine Außenfläche (22) umfasst, die ausgestaltet ist, an einer Innenfläche (24) des nackten, ringförmigen Gehäuses (16) fixiert zu werden, wobei der Block mit einer Haut (26) bedeckt ist, die fähig ist, die Kartusche (14) aus abreibbarem Material zu tragen, wobei der Block (20) und die Haut (26) den Mantel (18) bilden,
**dadurch gekennzeichnet, dass** es nacheinander umfasst:
- einen Schritt (ET1'), während dessen die Außenfläche (22) des Blocks (20) an der Innenfläche (24) des nackten, ringförmigen Gehäuses (16) fixiert wird,
- einen Schritt (ET2'), während dessen die Rundheit einer Innenfläche (32) des Blocks (20) kontrolliert wird und während dessen, wenn nötig, die Innenfläche (32) des Blocks (20) rundbearbeitet wird,
- einen Schritt (ET4'), während dessen gleichzeitig
die Haut (26) hergestellt und sie an dem Block (20) fixiert wird.

2. Verfahren nach dem vorstehenden Anspruch, **dadurch gekennzeichnet, dass**, während des Schritts (ET4') zur Herstellung der Haut (26) und zur Fixierung der Haut (26) an dem Block, der Block (20) mit einem imprägnierten Verbundmaterial bedeckt wird und das Verbundmaterial auf dem Block (20) polymerisiert wird, um die Haut (26) zu erhalten und sie gleichzeitig an dem Block (20) zu fixieren.

3. Verfahren nach dem vorstehenden Anspruch, **dadurch gekennzeichnet, dass**, während des Schritts (ET4') zur Herstellung der Haut (26) und zur Fixierung der Haut (26) an dem Block, das nackte, ringförmige Gehäuse (16), der Block (20) und das Verbundmaterial zusammen in einem Backmittel angeordnet werden, das gleichzeitig die Polymerisation des Verbundmaterials und dessen Fixierung an dem Block (20) ermöglicht.

4. Verfahren nach dem vorstehenden Anspruch, **dadurch gekennzeichnet, dass**, während des Schritts (ET4') zur Herstellung der Haut (26) und zur Fixierung der Haut (26) an dem Block, als Backmittel ein Autoklav-Behälter verwendet wird.

5. Verfahren nach einem der Ansprüche 3 oder 4, **dadurch gekennzeichnet, dass**, während des Schritts (ET4') zur Herstellung der Haut (26) und zur Fixierung der Haut (26) an dem Block, ein gewebtes und imprägniertes Verbundmaterial verwendet wird, mit dem der Block (20) umhüllt wird.

6. Verfahren nach einem der Ansprüche 3 bis 5, **dadurch gekennzeichnet, dass**, während des Schritts (ET4') zur Herstellung der Haut (26) und zur Fixierung der Haut (26) an dem Block, an dem Traggehäuse (12) mindestens ein weiteres Element fixiert wird.

7. Verfahren nach einem der Ansprüche 1 bis 6, **dadurch gekennzeichnet, dass**, während des ersten Schritts (ET1'), ein wabenförmiger Materialblock (20) mit konstanter Dicke verwendet wird.

8. Traggehäuse (12), das mindestens eine Kartusche (14) aus abreibbarem Material für eine Turbomaschine trägt, umfassend mindestens ein nacktes, ringförmiges Gehäuse (16) mit nicht-kreisförmigem Querschnitt auf mindestens einem Teil seiner axialen Ausdehnung und einen Materialblock (20), der eine Außenfläche (22) umfasst, die an eine Innenfläche (24) des nackten, ringförmigen Gehäuses (16) geklebt ist, und der mit einer Haut (26) bedeckt ist, die fähig ist, die Kartusche (14) aus abreibbarem Material zu tragen,
**dadurch gekennzeichnet, dass** die Innenfläche (32) des Blocks rundbearbeitet ist.

9. Verfahren zur Herstellung eines ausgestatteten, ringförmigen Gehäuses (10) einer Turbomaschine, **dadurch gekennzeichnet, dass** es eine erste Phase (P1') zur Herstellung eines Traggehäuses (12) gemäß dem Verfahren nach den Ansprüchen 1 bis 7 und eine zweite Phase (P2') umfasst, während derer eine ringförmige Kartusche (14) aus abreibbarem Material in das Traggehäuse (12) geklebt wird.

10. Turbomaschine, umfassend ein ausgestattetes, ringförmiges Gehäuse (10), das gemäß dem Verfahren nach Anspruch 9 erhalten wird.

## Claims

1. Method for manufacturing a carrying casing (12) provided with a collar (18) intended to carry at least one cartridge (14) of abradable material for a turbomachine, said carrying casing (12) comprising at least one bare annular casing (16) and one block of material (20) that comprises an outer face (22) configured to be secured to an inner face (24) of said bare annular casing (16), said block being covered with a skin (26) able to carry said cartridge (14) of abradable material, said block (20) and said skin (26) forming said collar (18),
**characterised in that** it comprises successively:
- a step (ET1') during which the outer face (22) of the block (20) is secured to the inner face (24) of the bare annular casing (16),
- a step (ET2') during which the circularity of an inner face (32) of the block (20) is monitored and during which, if necessary, the inner face (32) of the block (20) is machined to round,
- a step (ET4') during which, simultaneously, said skin (26) is produced and is secured to said block (20).

2. Method according to the preceding claim, **characterised in that** during the step (ET4') whereby the skin (26) is manufactured and said skin (26) is secured to the block, said block (20) is covered with an impregnated composite material and said composite material is polymerised on said block (20) to obtain said skin (26) while securing it to the block (20).

3. Method according to the preceding claim, **characterised in that** during the step (ET4') whereby the skin (26) is manufactured and said skin (26) is secured to the block, the bare annular casing (16), the block (20) and the composite material are arranged together in a cooking device simultaneously enabling the polymerisation of the composite material and the attachment thereof to the block (20).

4. Method according to the preceding claim, **characterised in that** during the step (ET4') whereby the skin (26) is manufactured and said skin (26) is secured to the block, the cooking means implemented is an autoclave enclosure.

5. Method according to one of claims 3 or 4, **characterised in that** during the step (ET4') whereby the skin (26) is manufactured and said skin (26) is secured to the block, a woven and impregnated composite material is used to drape the block (20).

6. Method according to one of claims 3 to 5, **characterised in that** during the step (ET4') whereby the skin (26) is manufactured and said skin (26) is secured to the block, at least one other element is secured to the carrying casing (12).

7. Method according to one of claims 1 to 6, **characterised in that**, during the first step (ET1'), a block (20) of honeycomb material with a constant thickness is used.

8. Carrying casing (12) supporting at least one cartridge (14) of abradable material for a turbomachine, comprising at least one bare annular casing (16) with a non-circular cross-section extending over at least one part of the axial length thereof and a block (20) of material that comprises an outer face (22) glued to an inner face (24) of said bare annular casing (16) and covered with a skin (26) capable of carrying said cartridge (14) of abradable material,
**characterised in that** the inner face (32) of the block is machined to round.

9. Method for manufacturing an equipped annular casing (10) of a turbomachine, **characterised in that** in comprises a first phase (P1') for manufacturing a carrying casing (12) according to the method of claims 1 to 7 and a second phase (P2'), during which an annular cartridge (14) of abradable material is glued inside said carrying casing (12).

10. Turbomachine comprising an equipped annular casing (10) obtained according to the method of claim 9.
